# EUROPEAN PATENT APPLICATION

(11) **EP 1 025 950 A2**
(43) Date of publication of application: **09.08.2000**
(21) Application number: 00102316.7
(22) Date of filing: 03.02.2000
(51) Int. Cl.: B23K 37/04

(54) **A clamping device with an articulated lever**

(30) Priority: 08.02.1999 IT TO990092
(71) Applicant: VEP Automation S.r.l., 10092 Beinasco (Torino) (IT)
(72) Inventor: Varetto, Ener, 10057 Sant'Ambrogio (Torino) (IT); Piccolo, Lio, 10095 Grugliasco (Torino) (IT)
(74) Representative: Cian, Paolo

(57) **Abstract**

A clamping device with an articulated lever comprises a body (3) and a lever (10) projecting from the body (3) through a slot (13). The lever (10) is connected by means of a toggle joint (9) to an operating rod (7) of a pneumatic actuator cylinder (5) and is mounted for pivoting about an axis (A) so that it can move to and fro along the slot (13) between a plurality of configurations at least one of which corresponds to a restraining configuration of the lever (10). Closure means (31; 33) associated with the slot (13) for closing the slot when the lever (10) is in any angular position include a cover element (31; 33) which is rotatable coaxially about the axis of pivoting of the lever (10) and is coupled for rotation with the lever (10).

## Description

The present invention relates to clamping devices with an articulated lever which are used mainly in the mechanical construction field, for example, in the automotive field, on welding or assembly lines for clamping parts of vehicles such as body or chassis elements in precise positions in order to perform processes thereon.

These devices are normally used in environments in which there are considerable quantities of foreign bodies in the form of dust or slag resulting, from example, from welding or assembly operations performed on the vehicles.

The clamping devices with an articulated lever most usually include a clamping lever which projects from a body and is mounted so as to be pivotable relative thereto by means of an actuator unit. Most commonly, the clamping lever is of the single-an type and extends from the device through a slot formed in the body of the device to allow for the to-and-fro movement of the lever. However, the presence of the slot constitutes a disadvantage, since foreign matters can enter the body through the slot and can easily damage the internal mechanisms of the device.

To overcome this disadvantage, clamping devices are produced, in which the body has a structure which is completely closed from the outside environment so as not to be affected by the fact that foreign bodies are present therein. In this case, to allow for the to-and-fro movement of the clamping lever, the lever is fork-shaped or U-shaped and its parallel arms are keyed at the opposite ends of a rotatable shaft which projects from the body of the device. However, since the shaft which brings about the pivoting of the lever projects from both sides of the body, and because of the fork-like shape of the lever, clamping devices of this type are considerably more bulky than similar devices having a single-arm lever, and are therefore unsuitable for use in applications in which the compactness of the devices is considered to be an important requirement.

When it is necessary for the clamping devices to be very compact and, at the same time, it is desired to achieve a seal against foreign bodies present in the working environment, clamping devices with single-arm levers and having means for closing the slot in the body are used.

The invention relates in particular to a clamping device with an articulated lever, comprising a body and a lever projecting from the body through a slot, the lever being mounted for pivoting about an axis so that it can move to and fro angularly along the slot between a plurality of preselected configurations at least one of which corresponds to a restraining configuration in which the lever can hold in a predetermined position a piece which is to be subjected to a process, the lever being connected by means of a toggle joint to an operating rod of an actuator cylinder, normally a pneumatically-operated cylinder, which is connected to the body of the device, and closure means being associated with the body for closing the slot at least when the lever is in the restraining configuration.

A clamping device of the above-mentioned type which has a cover articulated in the vicinity of the slot in the body is described in German patent application DE-G-8908288.5. The cover, which has a rigid structure, is intended to close the slot from the outside environment only when the articulated lever is in the restraining configuration whereas, when the lever adopts a configuration other than the restraining configuration, the slot is at least partially open so that the problem of the closure of the slot is only partially solved. Moreover, the cover is articulated on a pin which is disposed outside the body and is thus exposed directly to the outside environment and to the foreign bodies present therein, so that the articulation device of the cover may itself be subject to damage due to interference by slag present in the environment and may become stuck in the open position, thus becoming ineffective.

In order to overcome these problems, the subject of the invention is a clamping device of the above-mentioned type, characterized in that the means for closing the slot in the body include a cover element which is rotatable coaxially about the axis of pivoting of the lever and is coupled for rotation with the lever, the cover element being able to close the slot in the body when the lever is in any angular position.

By virtue of this concept, the clamping device according to the invention has the advantage of ensuring that the body is always closed from the outside environment so that it is impossible for foreign bodies to enter the body and damage the articulation devices present therein. The articulation structure of the cover element is also entirely protected inside the body, so that the slag present in the working environment cannot interfere with it. Finally, the device according to the invention is highly reliable in operation and requires very little maintenance. It is distinguished by a compact body shape which renders it suitable for operating even when, owing to problems of space, it would not be possible to use much more bulky clamping devices with fork-shaped articulated levers.

A further subject of the invention is a clamping device with an articulated lever, comprising a body and a lever projecting from the body through a slot, the lever being mounted for pivoting about an axis so that it can move to and fro angularly along the slot between a plurality of preselected configurations at least one of which corresponds to a restraining configuration in which the lever can hold in a predetermined position a piece which is to be subjected to a process, the lever being connected by means of a toggle joint to an operating rod of an actuator cylinder, normally a pneumatically-operated cylinder, which is connected to the body of the device, and the body being provided with sensor means for detecting the reaching of at least one of the preselected configurations by the lever, characterized in that the sensor means are arranged to detect the position of locating means coupled for rotation with the lever.

By virtue of this concept, the reaching of a preselected configuration by the clamping lever can be detected almost directly by checking the angular position of the lever, in contrast with clamping devices of the prior art, in which the configuration reached by the lever is determined by detecting the position of locating members fixed to the rod of the actuator cylinder so that any play present in the articulation system associated with the lever may affect the accuracy with which the position of the lever is determined.

Further characteristics and advantages of the invention will become clearer from a reading of the following detailed description, provided purely by way of non-limiting example, with reference to the appended drawings, in which:
Figure 1 is a side elevational view of a clamping device with an articulated lever according to the invention,

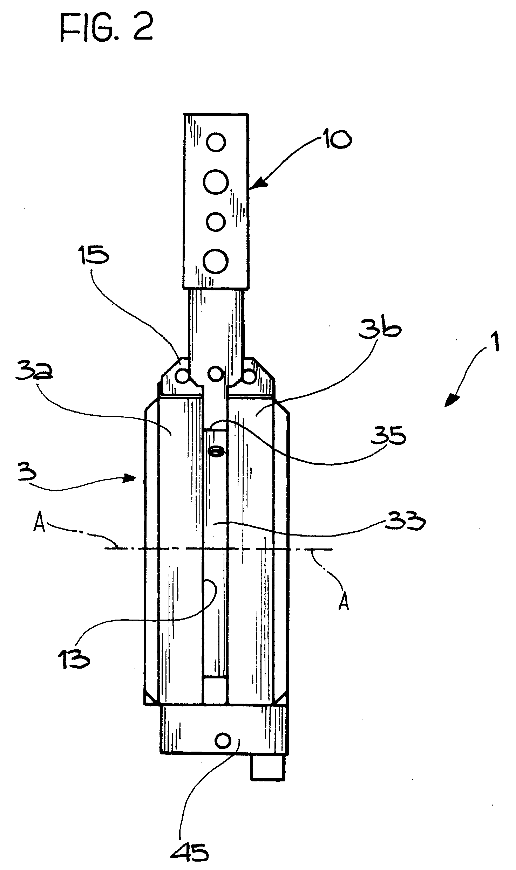

Figure 2 is an elevational view taken from above, as indicated by the arrow II of Figure 1,

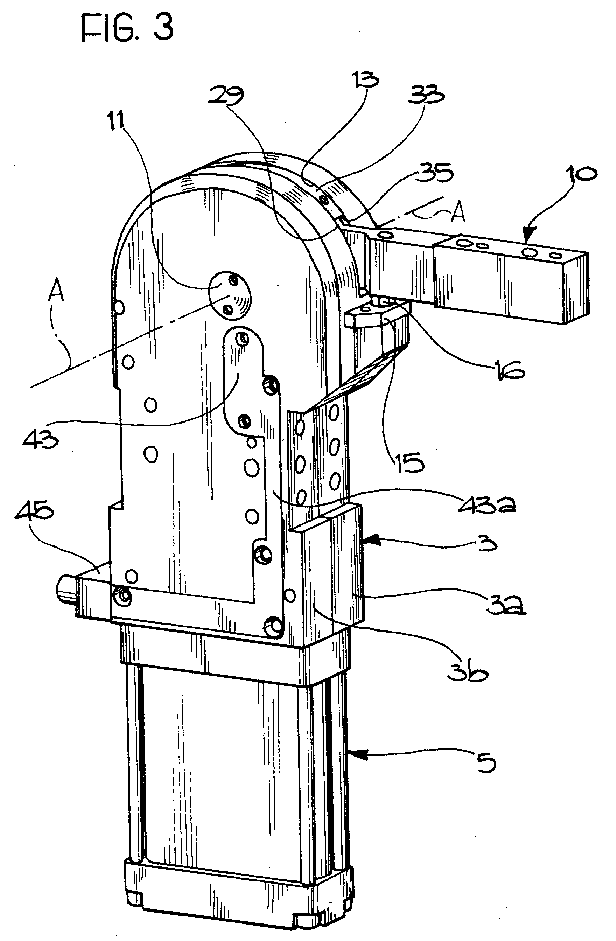

Figure 3 is an enlarged perspective view of the device of Figure 1,
Figure 4 is another perspective view of the device of Figure 3 from which a half-shell closing the body has been removed, and
Figure 5 is another perspective view of the device of Figure 4 with the lever shown in a different preselected configuration.

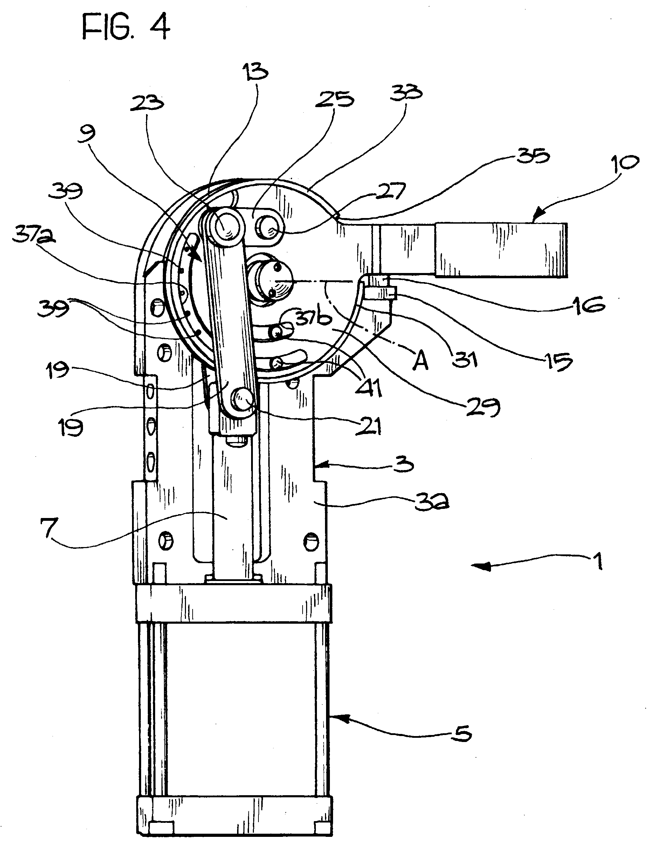

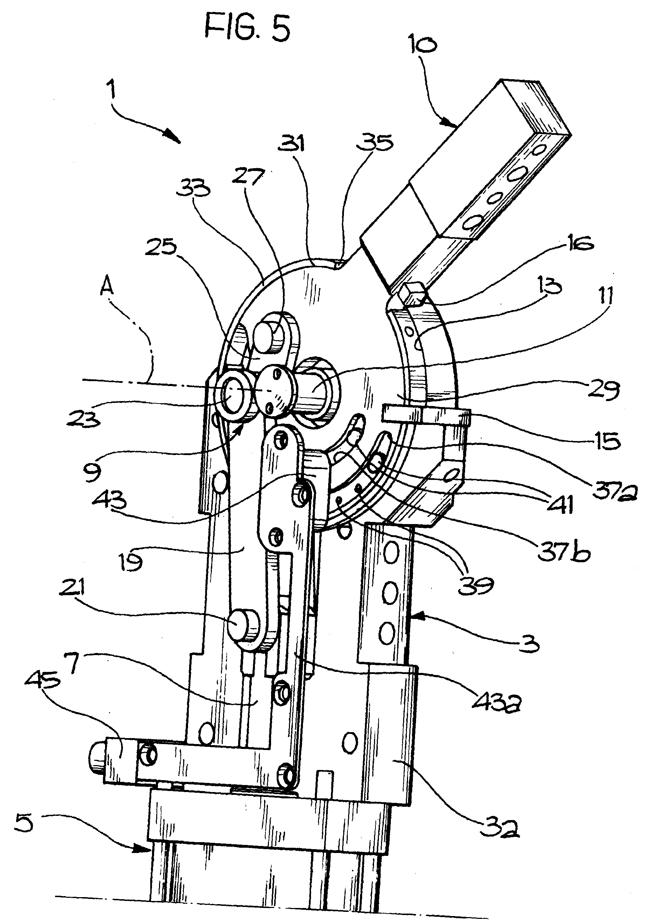

With reference to the drawings, a clamping device with an articulated lever according to the invention is generally indicated 1. The device 1 comprises a body 3 which preferably includes a pair of half-shells 3a, 3b made of metal, for example, nodular cast iron. An actuator unit 5 is associated with the body 3 and normally includes a pneumatically-operated cylinder known *per se* and hence not shown in detail in the drawings. In particular, the actuator unit 5 comprises an operating rod 7 (visible in Figures 4 and 5) connected to a clamping lever 10 by means of a toggle joint 9, which is also known *per se* and is normally used in clamping devices known in the art in order to render the restraining configuration of the lever irreversible, and which converts the rectilinear movement of the rod 7 into an angular pivoting movement of the lever 10.

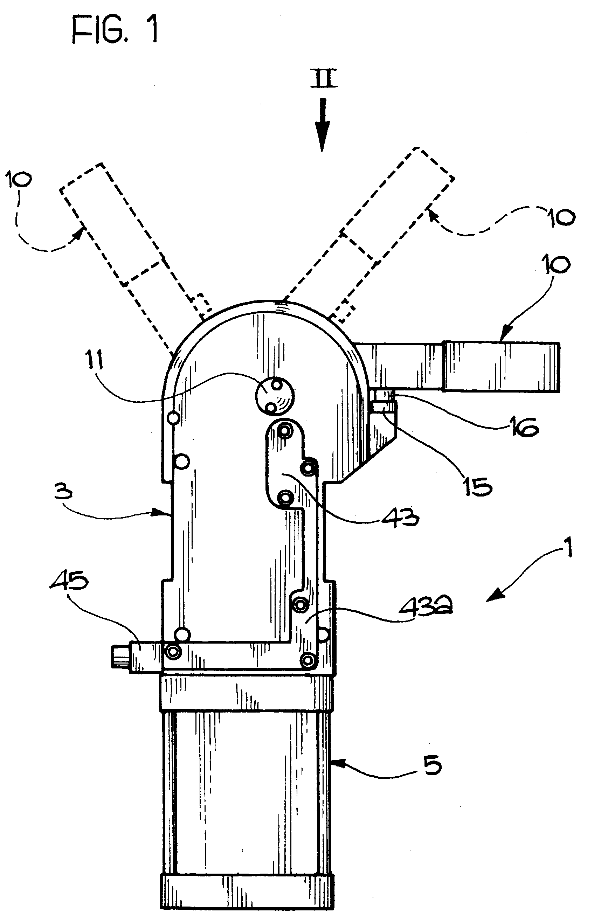

As a result of the axial movement of the rod 7, the lever 10 can adopt a plurality of preselected configurations, for example, a restraining configuration shown in continuous outline in Figure 1 and two other configurations spaced therefrom and indicated in broken outline in the same figure.

The lever 10 is mounted for moving to and fro angularly about an articulation pin 11 connected to the body 3 and extending along an axis A generally transverse the body 3 and perpendicular to the rod 7.

The body 3 has, at the top, (with reference to the drawings) a slot 13, along which the lever 10 can move to and fro angularly as a result of the movement of the rod 7 to reach its preselected configurations relative to the body 3. The slot 13 is advantageously shaped as an arc of a circle concentric with the axis A of pivoting of the lever 10.

At one end of the slot 13, a bracket-like portion 15 projects from the body 3 and constitutes an abutment surface for the head 16 of a screw member engaged in a corresponding hole formed in the lever 10. The screw member with the head 16 and the bracket-like portion 15 perform the function of a travel limit stop with fine adjustment of the angular position of the lever 10 in its restraining configuration, for example, in which the lever 10 is perpendicular to the rod 7, that is, to the general axis of the body 3.

The toggle joint 9 comprises a pair of main parallel connecting rods 19 each having one end articulated about a transverse pin 21 which extends through the end of the rod 7 closest to the axis A, and an opposite end articulated to a pin 23 to which a pair of secondary connecting rods 25 are also articulated. The secondary connecting rods 25 in turn are articulated about a pin 27 arranged so as to extend through a base portion 29 of the lever 10.

The base portion 29, which is advantageously formed integrally with the lever 10, is preferably in the shape of a disc concentric with the axis A of pivoting of the lever 10. In this case, the peripheral edge 31 of the base member 29 can itself constitute a cover element for the slot 13, which can close the slot 13 when the lever 10 is in any angular position.

According to a preferred characteristic of the invention, the base portion 29 of the lever 10 is surrounded by a ring 33 coaxial with the pivot axis A, mounted for sliding together with the lever 10 relative to the body 3 in a corresponding seat formed in the half-shells 3a and 3b, and having a radial opening 35 allowing the lever 10 to project from the ring and from the body 3. When the ring 33 is present, the portion 29 may also have a shape other than that of a disc.

The ring 33 advantageously has an outer surface which is resistant to welding so that slag cannot adhere to its outer surface and obstruct the pivoting of the lever 10. For example, it may be made entirely of a material resistant to welding, such as an aluminium-based material, or it may have a surface layer treated so as to oppose the adhesion of welding slag.

By virtue of the base portion 29, the structure of the lever 10 is particularly versatile. It can be used both for clamping devices in which the restraining position of the lever is perpendicular to the rod 7, as shown in the appended drawings, and for clamping devices in which the restraining position of the lever is parallel to the rod 7, simply by the application of marginal modifications to the portion 29 and by arranging it, in the latter case, in a reversed position relative to that of the former case whereas, with known clamping devices, the structure of the levers which enable clamping to be achieved when they are perpendicular or parallel to the rod 7 of the actuator cylinder differ from one another substantially.

The base member 29 preferably comprises a portion wide enough for the formation thereon of a pair of arcuate tracks 37a, 37b coaxial with the axis A and each having a plurality of seats 39 formed, for example by holes parallel to the axis A. Each seat 39 can be engaged by a corresponding locating member 41 such as a pin with an enlarged head. Sensor means 43, for example, of the known inductive microswitch type, are associated with the half-shell 3b of the body in order to detect the positions of the locating members 41 and hence the angular attitude of the lever 10. The sensor means 43 are associated with conductive strips 43a for connection to a connection box 45 provided, for example, with luminous led display means for indicating visually that the lever 10 has reached its preselected configurations. If the positions of the locating members 41 relative to the tracks 37a, 37b are changed, that is, if the members 41 are moved from one hole 39 in the tracks to another, the position for which the sensor means 43 impart an activation or stop command for the movement of the lever 10 is correspondingly modified.

When the device 1 is in operation, the toggle joint unit 9 is operated as a result of the movement of the operating rod 7 of the actuator cylinder 5, converting the linear movement of the rod 7 into a corresponding angular movement of the lever 10 to-and-fro about the axis A. For example, the lever 10 may reach its restraining configuration shown in continuous outline in Figure 1 from a configuration spaced therefrom, such as one of the two configurations shown in broken outline in Figure 1.

During the pivoting of the lever 10, a portion of the peripheral edge 31 of the base portion 29, if the ring 33 is absent, or a portion of the ring 33 itself, occupies the slot 13, thus constituting closure means for the slot, which means are fixed for rotation with the lever 10 and can keep the slot constantly closed from the exterior so as effectively to protect the internal mechanisms of the body 3 from the foreign bodies present in the working environment.

The base portion 29 of the lever 10 has a surface the extent of which is such that it can advantageously be used for supporting the locating pins 41, enabling its angular position to be detected directly by means of the sensor unit 43. Thus the determination of the reaching of a predetermined position by the lever 10 can thus be more accurate than in previously known devices since it is not affected by possible uncertainties due to play in the elements of the joint unit 9.

## Claims

1. A clamping device with an articulated lever, comprising a body (3) and a lever (10) projecting from the body (3) through a slot (13), the lever (10) being mounted for pivoting about an axis (A) so that it can move to and fro angularly along the slot (13) between a plurality of preselected configurations at least one of which corresponds to a restraining configuration in which the lever (10) can hold in a predetermined position a piece which is to be subjected to a process, the lever (10) being connected by means of a toggle joint (9) to an operating rod (7) of an actuator cylinder (5), normally a pneumatically-operated cylinder, which is connected to the body (3) of the device (1), and closure means (31; 33) being associated with the body (3) for closing the slot (13) at least when the lever (10) is in the restraining configuration, characterized in that the means for closing the slot (13) in the body (3) include a cover element (31; 33) which is rotatable coaxially about the axis (A) of pivoting of the lever (10) and is coupled for rotation with the lever (10), the cover element (31; 33) being able to close the slot (13) in the body (3) when the lever (10) is in any angular position.

2. A device according to Claim 1, characterized in that the slot (13) is shaped substantially as an arc of a circle concentric with the axis (A) of pivoting of the lever (10).

3. A device according to Claim 1 or Claim 2, characterized in that the cover element for the slot comprises a base portion (29) which is disposed inside the body (3) and from which the lever (10) extends.

4. A device according to Claim 3, characterized in that the base portion (29) is substantially in the shape of a disc concentric with the axis (A) of pivoting of the lever (10).

5. A device according to Claim 3 or Claim 4, characterized in that the base portion (29) is formed integrally with the lever (10).

6. A device according to any one of Claims 3 to 5, characterized in that the cover element for the slot (13) includes a ring (33) which is coaxial with the axis (A) of pivoting of the lever (10), is arranged so as to surround the base portion (29), is mounted for sliding relative to the body (3), and has a radial opening (35) allowing the lever (10) to project out of the body.

7. A device according to any one of Claims 1 to 6, characterized in that the cover element (31; 33) has an outer surface which is substantially resistant to welding.

8. A device according to Claim 6 or Claim 7, characterized in that the ring (33) is made of a material based on aluminium.

9. A device according to any one of Claims 1 to 8, characterized in that the body (3) has sensor means (43) for detecting the reaching of at least one of the preselected configurations by the lever (10), the sensor means (43) being arranged to detect the position of locating means (41) coupled for rotation with the lever (10).

10. A device according to Claim 9, characterized in that the base portion (29) has at least one appendage (37a, 37b) which supports the locating means (41) and which can be arranged in a position facing the sensor means (43) as a result of the reaching of at least one preselected configuration by the lever (10).

11. A device according to Claim 10, characterized in that a plurality of seats (39) is formed in the base portion (29), the seats being arranged along at least one arcuate track (37a, 37b) coaxial with the axis of pivoting (A) of the lever (10), each of the seats (39) being able to house a pin-like locating member (41) for interacting with the sensor means (43).

12. A clamping device with an articulated lever, comprising a body (3) and a lever (10) projecting from the body (3) through a slot (13), the lever (10) being mounted for pivoting about an axis (A) so that it can move to and fro angularly along the slot (13) between a plurality of preselected configurations at least one of which corresponds to a restraining configuration in which the lever (10) can hold in a predetermined position a piece which is to be subjected to a process, the lever (10) being connected by means of a toggle joint (9) to an operating rod (7) of an actuator cylinder (5), normally a pneumatically-operated cylinder, which is connected to the body (3) of the device (1), and the body (3) being provided with sensor means (43) for detecting the reaching of at least one of the preselected configurations by the lever (10), characterized in that the sensor means (43) are arranged to detect the position of locating means (41) coupled for rotation with the lever (10).

13. A device according to Claim 12, characterized in that the lever (10) extends from a base portion (29) mounted for rotating about the axis (A) inside the body (3) and having at least one appendage which supports the locating means (41) and can be arranged in a position facing the sensor means (43) as a result of the reaching of the at least one preselected configuration by the lever (10).

14. A device according to Claim 13, characterized in that a plurality of seats (39) formed in the base portion (29) are arranged along at least one arcuate track (37a, 37b) coaxial with the axis (A) of pivoting of the lever (10), each of the seats (39) being able to house a pin-like locating member (41) for interacting with the sensor means (43).

15. A device according to Claim 14, characterized in that the base portion (29) is substantially disc-shaped and concentric with the axis (A) of pivoting of the lever (10).
